# EUROPEAN PATENT APPLICATION

(11) **EP 2 489 988 A2**
(43) Date of publication of application: **22.08.2012**
(21) Application number: 12152251.0
(22) Date of filing: 24.01.2012
(51) Int. Cl.: G01D 5/347, G01D 18/00, G01D 5/244, F15B 19/00

(54) **Servo motor manufacturing method, servo motor manufacturing apparatus, servo motor, and encoder**

(30) Priority: 15.02.2011 JP 2011030294
(71) Applicant: Kabushiki Kaisha Yaskawa Denki, Kitakyushu-shi, Fukuoka 806-0004 (JP)
(72) Inventor: YOSHIDA, Yasushi, Fukuoka, 806-0004 (JP); YOSHIDOMI, Shirou, Fukuoka, 806-0004 (JP); YAMAGUCHI, Yosuke, Fukuoka, 806-0004 (JP); MATSUTANI, Yasuhiro, Fukuoka, 806-0004 (JP)
(74) Representative: Viering, Jentschura & Partner

(57) **Abstract**

The servo motor manufacturing method, comprises a disk position adjustment step (S5, S10, S12, S15, S17, S20, S25) for adjusting a position of a rotating disk (110) with respect to a shaft (SH), in a case where the rotating disk (110) to which at least one concentric pattern (CP) is formed around a disk center (O) is to be fixed to the shaft (SH) of a motor (M), wherein in the disk position adjustment step (S5, S10, S12, S15, S17, S20, S25), the concentric pattern (CP) is used as a scale of a linear encoder (160) to adjust an eccentricity of the rotating disk (110).

## Description

### TECHNICAL FIELD

The present invention relates to a manufacturing method of a servo motor comprising an encoder, a servo motor manufacturing apparatus, a servo motor, and an encoder.

### BACKGROUND ART

There are two types of optical encoders: transmissive encoders and reflective encoders. A transmissive encoder positions light source on one side of a rotating disk, and a light receiving element on the other side of the rotating disk. The light emitted from the light source passes through the rotating disk and is received by the light receiving element. On the other hand, a reflective encoder positions both the light source and the light receiving element on one side of the rotating disk. The light emitted from the light source is reflected by the rotating disk and received by the light receiving element. With both of these encoders, the rotational position and rotating speed of the rotator to which the rotating disk is fixed are detected based on an output signal of the light receiving element that received light of a roughly pulsating form due to the rotation of the rotating disk.

As to a prior art related to transmissive encoders, JP, A, 2010-96503 is known.

### DISCLOSURE OF THE INVENTION

### Problem to be Solved by the Invention

Transmissive encoders place the rotating disk and optical module constituting the light receiving element in close proximity. As a result, when the optical module is installed under normal conditions, the operator adjusts the position of the optical module manually while verifying the positional relationship of the light receiving element and rotating disk using a microscope.

Nevertheless, when the optical module and rotating disk are placed relatively far apart from each other, as in the case of a reflective encoder, for example, position adjustments using a microscope are rather difficult.

An object of the present invention to provide a manufacturing method of a servo motor, a servo motor manufacturing apparatus, a servo motor, and an encoder capable of enabling easy servo motor manufacturing with highly accurate positional adjustment of the rotating disk and optical module, even if the rotating disk and optical module comprising the light receiving element are positioned relatively far apart.

### Means for Solving the Problems

In order to achieve the above-mentioned object, according to the first aspect of the present invention, there is provided a manufacturing method of servo motor comprising a disk position adjustment step for adjusting a position of a rotating disk with respect to a shaft, in a case where the rotating disk to which at least one concentric pattern is formed around a disk center is to be fixed to the shaft of a motor, wherein: in the disk position adjustment step, the concentric pattern is used as a scale of a linear encoder to adjust an eccentricity of the rotating disk.

According to the second aspect, in the manufacturing method of servo motor according to the first aspect, in the disk position adjustment step, a position of the rotating disk is adjusted so that the axis of the shaft aligns with a disk center of the rotating disk, based on an output signal of the linear encoder capable of detecting a change in a radial direction of the concentric pattern of a partial circumferential region of the rotating disk.

According to the third aspect, in the manufacturing method of servo motor according to the second aspect, in the disk position adjustment step, an amount of eccentricity and a direction of eccentricity of the disk center with respect to the axis are identified by means of a change in the radial direction of the concentric pattern when the rotating disk is rotated; and disk position adjusting means moves the rotating disk in the radial direction based on a direction and an amount that result in elimination of the amount of eccentricity.

According to the fourth aspect, in the manufacturing method of servo motor according to the first to third aspect, the manufacturing method of servo motor further comprises a module position adjustment step for adjusting a position of a optical module with respect to the rotating disk in a case where the optical module comprising on a substrate a first light receiving element and a second light receiving element that receive light that is emitted from a light source and subjected to an action of the concentric pattern is fixed facing the rotating disk installed to the shaft; wherein in the module position adjustment step, a radial position of the optical module is adjusted with respect to the rotating disk based on a change in amplitude of output signals of the first light receiving element and the second light receiving element, and an inclined position of the optical module is adjusted with respect to radial lines that extend in a radial shape from the disk center in the rotating disk based on a difference in phase between the output signal of the first light receiving element and the output signal of the second light receiving element.

In order to achieve the above-mentioned object, according to the fifth aspect of the present invention, there is provided a servo motor manufacturing apparatus, comprising: a linear encoder configured to use a concentric pattern formed around a disk center of a rotating disk as a scale; disk position adjusting means configured to adjust a position of the rotating disk so that the axis of a shaft of a motor to which the rotating disk is fixed aligns with the disk center of the rotating disk; and control means configure to control the disk position adjusting means based on an output signal of the linear encoder.

According to the sixth aspect, in the servo motor manufacturing apparatus according to the fifth aspect, the servo motor manufacturing apparatus further comprises module position adjusting means having first module position adjusting means configured to adjust a radial position of an optical module comprising on a substrate a first light receiving element and a second light receiving element that receive light that is emitted from a light source and subjected to an action of the concentric pattern with respect to the rotating disk, and second module position adjusting means configured to adjust an inclined position of the optical module with respect to radial lines that extend in a radial shape from the disk center in the rotating disk, wherein the control means control the first module position adjusting means based on a change in amplitude of output signals of the first light receiving element and the second light receiving element, and control the second module position adjusting means based on a difference in phase between the output signal of the first light receiving element and the output signal of the second light receiving element.

In order to achieve the above-mentioned object, according to the seventh aspect of the present invention, there is provided a servo motor, comprising: as an encoder, a rotating disk having at least one concentric pattern formed around a disk center, the concentric pattern used to adjust an amount of eccentricity of the disk center and the axis of a shaft of a motor.

According to the eighth aspect, in the servo motor according to the seventh aspect, the encoder comprises on a substrate an optical module having a first light receiving element and a second light receiving element that receive light that is emitted from a light source and subjected to an action of the concentric pattern; the optical module is disposed on a position adjusted with respect to the rotating disk based on optical signals received by the first light receiving element and the second light receiving element.

According to the ninth aspect, in the servo motor according to the eighth aspect, the first light receiving element and the second light receiving element are arranged axisymmetrically with respect to a center line of the substrate.

According to the tenth aspect, in the servo motor according to the eighth or ninth aspect, the rotating disk has a pattern for position detection established with the concentric pattern along a circumferential direction; and the optical module has on the substrate a light receiving element for position detection, which receives light that is emitted from the light source and subjected to an action of the pattern for position detection.

According to the eleventh aspect, in the servo motor according to the eighth to tenth aspect, the light source is provided to the substrate; and the first light receiving element and the second light receiving element receive light that is reflected from the concentric pattern.

In order to achieve the above-mentioned object, according to the 12th aspect of the present invention, there is provided an encoder, comprising: a rotating disk having at least one concentric pattern formed around a disk center, the concentric pattern used to adjust an amount of eccentricity of the disk center and the axis of a shaft of a motor.

### Advantages of the Invention

According to the present invention, it is possible to easily manufacture a servo motor while easily adjusting the position of the rotating disk and optical module, even if the rotating disk and optical module comprising the light receiving element are positioned relatively far apart.

### BRIEF DESCRIPTION OF THE DRAWINGS

FIG. 1 is an explanatory view for explaining the general configuration of a servo motor comprising an encoder according to the embodiment.
FIG. 2 is an explanatory view for explaining the general configuration of a reflective encoder according to the embodiment.
FIG. 3 is a plan view showing a part of the pattern formation surface of the rotating disk of the reflective encoder.
FIG. 4 is a layout diagram illustrating the layout of the light receiving element of a substrate of the reflective encoder.
FIG. 5 is a longitudinal sectional view of the substrate along line V-V in FIG. 4 for explaining the light source.
FIG. 6 is an explanatory view for explaining the configuration of the section of the servo motor manufacturing apparatus according to the embodiment that is used when adjusting the position of the rotating disk.
FIG. 7 is a top view showing an example when the axis of the shaft and the disk center of the rotating disk are eccentric.
FIG. 8 is an explanatory view for explaining the motion of the concentric pattern of the linear encoder when the axis of the shaft and the disk center of the rotating disk are eccentric.
FIG. 9 is an explanatory view for explaining the configuration of the section of the servo motor manufacturing apparatus according to the embodiment that is used when adjusting the position of the optical module.
FIG. 10 is a top view illustrating an example of the layout of the linear encoder for adjusting the module position.
FIG. 11A is an explanatory view for explaining an example of the module position adjustment operation.
FIG. 11B is an explanatory view for explaining an example of the module position adjustment operation.
FIG. 12 is a flowchart showing the control details during disk position adjustment, which is executed by the CPU of the controller.
FIG. 13 is a flowchart showing the control details during module position adjustment, which is executed by the CPU of the controller.

### BEST MODE FOR CARRYING OUT THE INVENTION

The following describes the disclosed embodiment with reference to accompanying drawings.

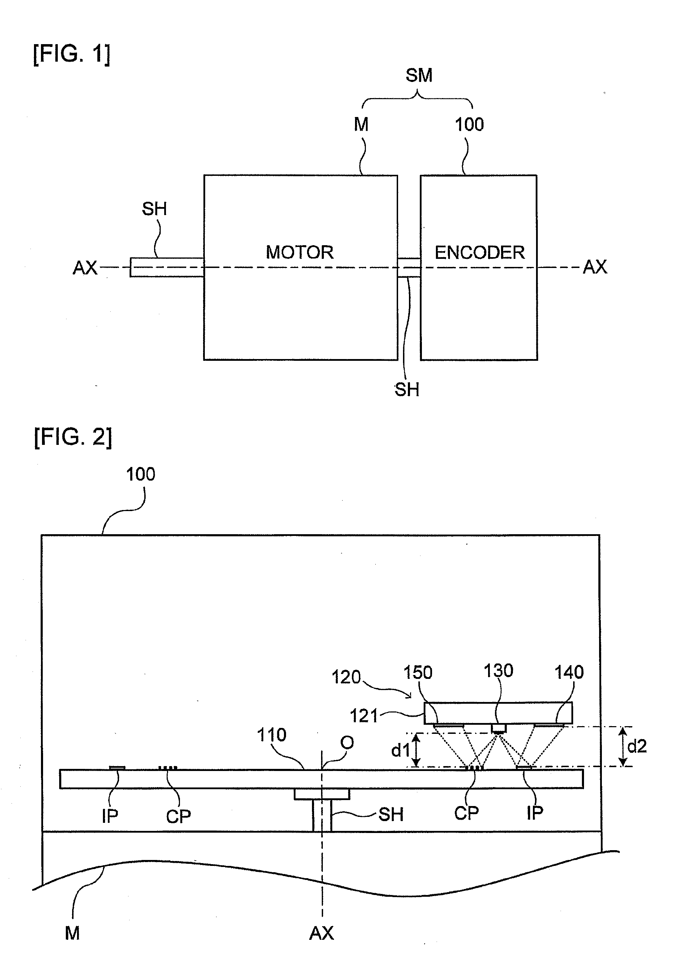

Servo motor
First, a general explanation of the configuration of the servo motor comprising the encoder according to the embodiment will be described with reference to FIG. 1. FIG. 1 is an explanatory view for explaining the general configuration of a servo motor comprising an encoder according to the embodiment.

As shown in FIG. 1, a servo motor SM comprises a reflective encoder 100 as the encoder according to the embodiment, and a motor M. The motor M is one example of a power generation source that does not include the reflective encoder 100. While there are cases in which the motor M is referred to as a servo motor as a single unit, the servo motor SM is this embodiment comprises a configuration that includes the reflective encoder 100. The motor M comprises a shaft SH as the rotator on at least one end. The motor M outputs a rotational force by rotating around the shaft SH around the axis AX.

Note that the motor M is not particularly limited as long as it is a motor controlled based on position data. Further, the motor M is not limited to an electrically operated motor that uses electricity as the power source, allowing use of a motor that is based on another type of power source, such as a hydraulic motor, pneumatic motor, or steam motor. For ease of explanation, the following descriptions employ an electrically operated motor as the motor M as an example.

The reflective encoder 100 connects the rotational power output end of the shaft SH of the motor M to the end on the opposite side. Then, the reflective encoder 100 detects the relative position (relative angle from a reference angle) of the shaft SH itself or the rotation target of the motor M by detecting the position of the shaft SH, and outputs the position data that indicates the position.

The arranged position of the reflective encoder 100 is not particularly limited to the example shown in the embodiment. For example, the reflective encoder 100 may be arranged so that it directly connects to the output end of the shaft SH. Further, the reflective encoder 100 may connect to the shaft SH, etc., via a reduction gear, rotational direction converter, or other mechanism, such as a brake.

Note that this embodiment is particularly effective with the servo motor SM having a structure in which a rotating disk 110 of the encoder 100 is directly connected to the shaft SH of the motor M, as illustrated in FIG. 1 and FIG. 2. This is because, when a servo motor is manufactured using an encoder having bearings and the axis to which the rotating disk is fixed, the optical module and the rotating disk of the encoder are integrally assembled with the axis position aligned with the rotating shaft and bearings. As a result, the encoder is assembled to the motor so that the rotating shaft and shaft SH are coaxial, thereby connecting the rotating disk of the encoder, the optical module, and the shaft SH of the motor M without eccentricity. This eliminates any particular need to adjust the positions of the rotating disk and optical module. On the other hand, in this embodiment, the encoder 100 does not comprise a rotating shaft or bearings; rather, the rotating disk 110 of the encoder 100 is directly connected to the shaft SH of the motor M. In this case, when the servo motor SM is manufactured, the position of the rotating disk 110 needs to be adjusted with respect to the shaft SH, and the position of an optical module 120 needs to be adjusted with respect to the rotating disk 110. If these adjustments are not made, the encoder 100 cannot be assembled to the motor M with accuracy. Here, explanations are given using a case where a so-called "built-in type" encoder 100 is used wherein the rotating disk 110 is directly connected to the shaft SH of the motor M, as illustrated in FIG. 1 and FIG. 2. Nevertheless, use of a "complete type" of encoder 100 which is formed so that the rotating disk 110 is connected to the shaft dedicated to the encoder 100, and the shaft is connectable to the motor M, etc., is also possible.

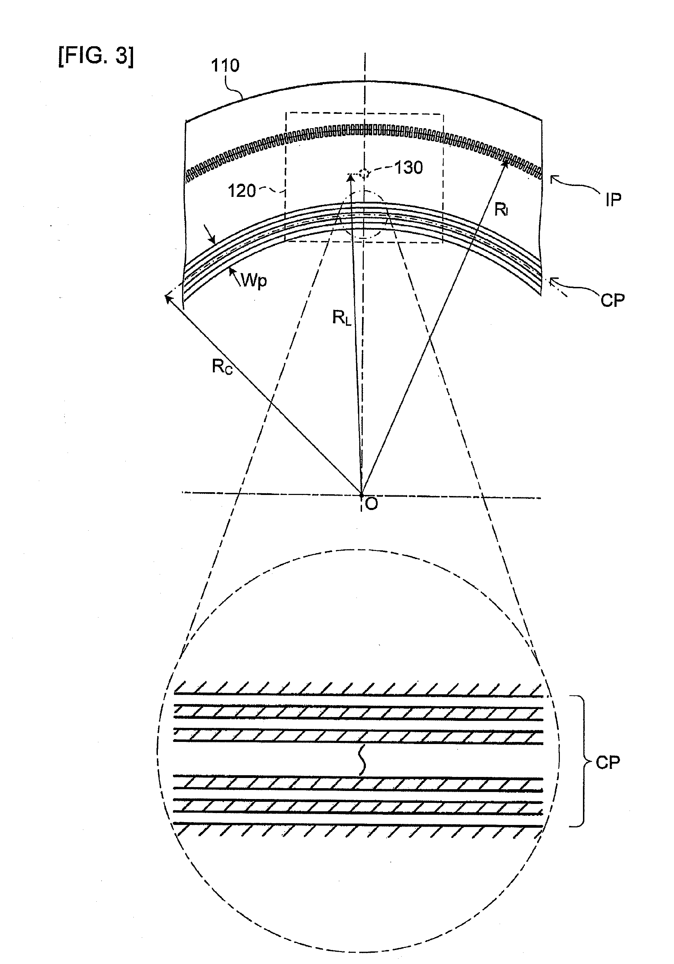

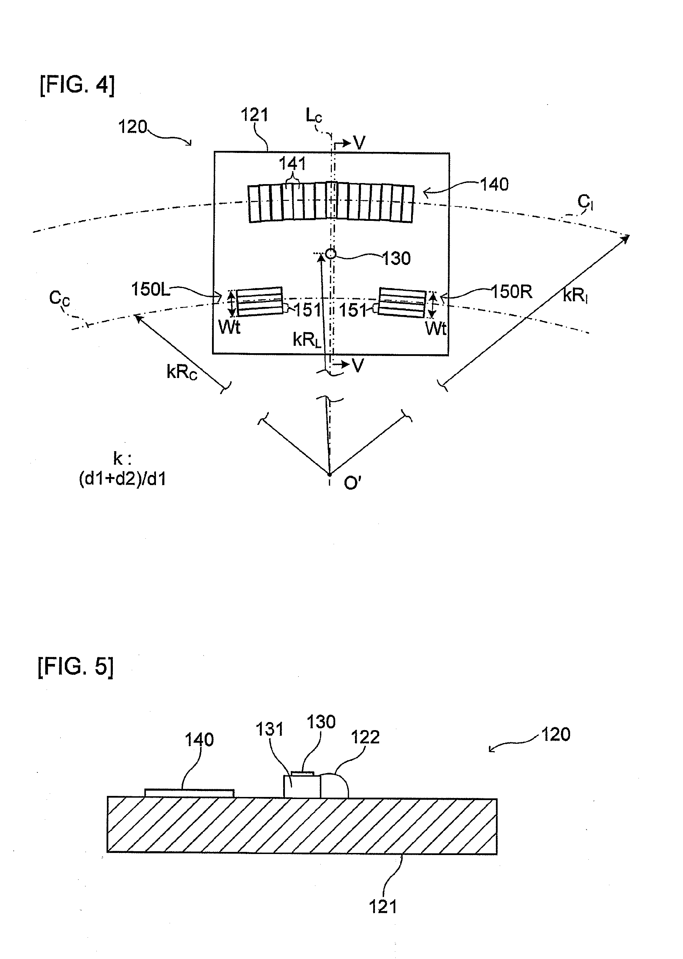

Reflective encoder
Next, the configuration of the reflective encoder 100 according to this embodiment will be described with reference to FIG. 2 to FIG. 5. FIG. 2 is an explanatory view for explaining the general configuration of the reflective encoder according to the embodiment. FIG. 3 is a plan view showing a part of the pattern formation surface of the rotating disk of the reflective encoder. FIG. 4 is a layout diagram illustrating the layout of the light receiving element of a substrate of the reflective encoder. FIG. 5 is a longitudinal sectional view of the substrate along line V-V in FIG. 4 for explaining the light source.

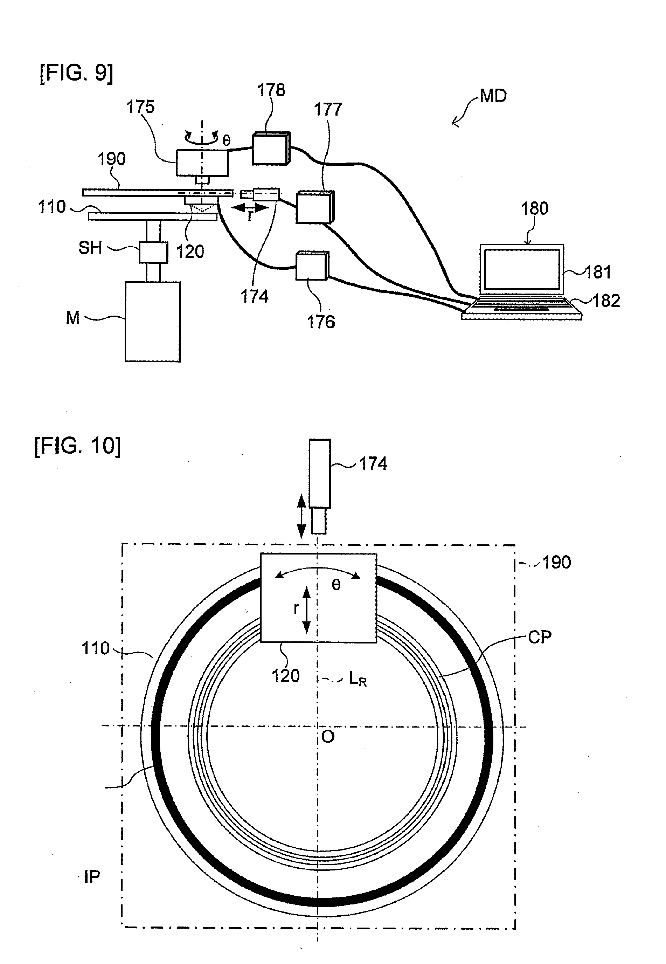

As shown in FIG. 2, the reflective encoder 100 according to the embodiment comprises the rotating disk 110 connected to the shaft SH, and the optical module 120 positioned opposite the rotating disk 110. The optical module 120 is provided to a printed-wiring board 190 (see FIG. 9).

Rotating disk
The rotating disk 110 is formed in a discoid shape as shown in FIG. 3, and arranged so that a disk center O substantially aligns with the axis AX. Then, the rotating disk 110 is connected to the shaft SH that is rotatable around this axis AX via a hub, etc. Accordingly, the rotating disk 110 is rotatably arranged around the axis AX in accordance with the rotation of the motor M.

As shown in FIG. 3, an incremental pattern IP is formed on the rotating disk 110, along the circumferential direction. Additionally, a plurality of concentric patterns CP that forms a concentric circular shape around the disk center O are radially formed on the inner peripheral side of the incremental pattern IP. At this time, the rotating disk 110 is formed by a material that either transmits or absorbs light, for example. Then, the incremental pattern IP and the concentric patterns CP are patterned on the rotating disk 110 of a material that either transmits or absorbs the light. Specifically, reflective slits are formed concentrically on the rotating disk 110 by a method such as deposition of a highly reflective material thereon. Note that the incremental pattern IP is equivalent to the pattern for position detection described in the claims.

The above-described reflective slits are formed equidistant at a predetermined pitch, causing the incremental pattern IP to comprise a pattern that repeats light reflection and absorption or transmission at that pitch. On the other hand, the concentric patterns CP comprise a pattern in which a plurality of reflective slits of a concentric circular shape around the disk center O is formed at a predetermined spacing in the radial direction. With this pattern, light reflection and absorption or transmission are repeated in the radial direction on the rotating disk 110. While details will be described later, the concentric patterns CP are used to adjust the position of the rotating disk 110 with respect to the shaft SH when the rotating disk 110 is to be fixed to the shaft SH during the manufacture of the servo motor SM. Further, the concentric patterns CP are also used to adjust the position of the optical module 120 with respect to the rotating disk 110 when the optical module 120 is fixed opposite the rotating disk 110.

Optical module
As shown in FIG. 4, the optical module 120 comprises a substrate 121 opposite the rotating disk 110. Then, the light source 130, a light receiving element group 140 for position detection, and light receiving element groups 150L and 150R for position adjustment are provided to the surface on the side opposite the rotating disk 110 of the substrate 121. The light source 130 emits light toward the rotating disk 110. The light receiving element group 140 for position detection includes a plurality of light receiving elements 141 for position detection that receive the light reflected from the incremental pattern IP. The light receiving element groups 150L and 150R for position adjustment include a plurality of light receiving elements 151 for position adjustment that receive the light reflected from the concentric patterns CP. The light receiving element groups 150L and 150R for position adjustment are arranged asymmetrically to a center line L_{C} of the substrate 121. Note that the center line L_{C} is a line that substantially coincides with the axis of symmetry in the direction of rotation of the substrate 121, and the light source 130 is arranged on the center line L_{C}. Further, the light receiving element group 140 for position detection and the light receiving element groups 150L and 150R for position adjustment are preferably formed using photolithography on the substrate 121 formed by silicon, for example. In such a case, the light receiving element group 140 for position detection and the light receiving element groups 150L and 150R for position adjustment can be formed with extremely high precision. This makes it possible to further improve the precision of positioning the substrate 121 described later.

Note that the light receiving element group 150L for position adjustment is equivalent to the first light receiving element described in the claims. The light receiving element group 150R for position adjustment is equivalent to the second light receiving element. And, the light receiving element group 140 for position detection is equivalent to the light receiving element for position detection.

The light receiving element groups 150L and 150R for position adjustment each comprise one set of a plurality (four in the example shown in FIG. 4) of the light receiving elements 141 for position detection for detecting four optical signals with different phases. These four light receiving elements 151 for position adjustment are each arranged in positions that divide the area corresponding to one pitch in the radial direction of the concentric pattern CP into four, and output a signal every 90° based on an electrical angle. Then, in each of the light receiving element groups 150L and 150R for position adjustment, these four light receiving elements 151 for position adjustment are arranged in an array along the radial direction (the radial direction with reference position O' as the center as described later) of the rotating disk 110.

Here, the four optical signals that differ in phase described above include the optical signals of phase A+ (0 degrees), phase B+ (90 degrees) which is shifted by a phase of 90 degrees from phase A+, phase A- (180 degrees) which is shifted by a phase of 180 degrees from phase A+, and phase B- (270 degrees) which is shifted by a phase of 270 degrees from phase A+. The above-described optical signal of phase A+ and optical signal of phase B+, which is a signal that differs by a phase of 90°, are used to detect the direction in which the concentric patterns CP shift, depending on whether phase A+ or phase B+ is detected first. Further, the optical signals of phases A+ and B+ as well as the optical signals of phases A- and B-, which differ by a phase of 180°, are used for assuring the reliability of the optical signals.

The optical module 120, as shown in FIG. 3, is arranged so that the light source 130 faces the substantially central position between the radially central position (position of a radius R_{I} from the disk center O) of the incremental pattern IP, and the radially central position (position of a radius R_{C} of the disk center O) of the concentric patterns CP. With this arrangement, the light receiving element group 140 for position detection that is arranged on the substrate 121 is placed in a radial position corresponding to the incremental pattern IP formed on the rotating disk 110. Further, the light receiving element groups 150L and 150R for position adjustment that are arranged on the substrate 121 are placed in a radial position corresponding to the concentric patterns CP formed on the rotating disk 110.

In the light receiving element group 140 for position detection, the plurality of light receiving elements 141 for position detection is arranged in an array along the circumferential direction (direction C_{I} in FIG. 4) of the rotating disk 110. Note that the direction C_{I} refers to the circumferential direction of a radius kR_{I} having as its center the reference position O' located at a distance kR_{L}, which is k times [k = d1 + d2)/d1) a length R_{L} from the light source 130, as shown in FIG. 4. The distance R_{I} is the distance from the disk center O of the rotating disk 110 to the central position of the incremental pattern IP, as shown in FIG. 3. The distance R_{L} is the distance from the disk center O of the rotating disk 110 to the light source 130. This is because the light emitted from the light source 130 in the reflective encoder 100 is reflected by the rotating disk 110, and the reflected light is received by the light receiving element group 140 for position detection, as shown in FIG. 2. That is, the enlarged image of the pattern is front-projected onto the light receiving element group 140 for position detection. Specifically, the distance of the optical path of the emitted light from the light source 130 to the rotating disk 110 is d1, and the distance of the optical path of the reflected light from the rotating disk 110 to the light receiving element group 140 for position detection is d2. As a result, the enlarged image that enlarges the incremental pattern IP k times [k = (d1+ d2)/dl] is front-projected onto the light receiving element group 140 for position detection. As a result, the light receiving element group 140 for position detection is arranged along direction C_{I}, enabling conformance with the enlarged image of the front-projected incremental pattern IP. Furthermore, the orientation of each of the light receiving elements 141 for position detection that make up the light receiving element group 140 for position detection is arranged in a radial shape with the above-described reference position O' as the center. With this arrangement, the orientation of each of the light receiving elements 141 for position detection is an orientation that conforms to the image of the front-projected incremental pattern IP that is enlarged k times.

In the light receiving element groups 150L and 150R for position adjustment, the plurality of the light receiving elements 151 for position adjustment is arranged in an array along the radial direction (the radial direction of a circle with the reference position O' as the center in FIG. 4) of the rotating disk 110. Further, the orientation of each of the light receiving elements 151 for position adjustment is in the circumferential direction (direction C_{C} in FIG. 4) of the rotating disk 110. Note that the above-described direction C_{C} refers to the circumferential direction of a radius kRc, having the reference position O' as the center, given the distance R_{C} from the disk center O of the rotating disk 110 to the central position of the concentric patterns CP, as shown in FIG. 3 and FIG. 4. Each of the light receiving elements 151 for position adjustment that make up the light receiving element groups 150L and 150R for position adjustment is thus arranged along the radial direction of the circle centering around the reference position O' and is oriented in the direction C_{C}. With this arrangement, conformance with the image of the concentric pattern CP that is front-projected to a size of k times the original size is possible, as described above. Further, a radial width Wt of the light receiving element groups 150L and 150R for position adjustment substantially match a value equivalent to k times a radial width Wp of the concentric patterns CP of the rotating disk 110.

As shown in FIG. 5, a chip 131 on which the light source 130 is formed is adhered to the substrate 121 using a conductive adhesive such as silver paste. The light source used as the light source 130 is a light emitting diode (LED), for example. A wiring pattern (not shown) is formed on the surface of the substrate 121, and connected with the electrodes of the light source 130 by wiring 122.

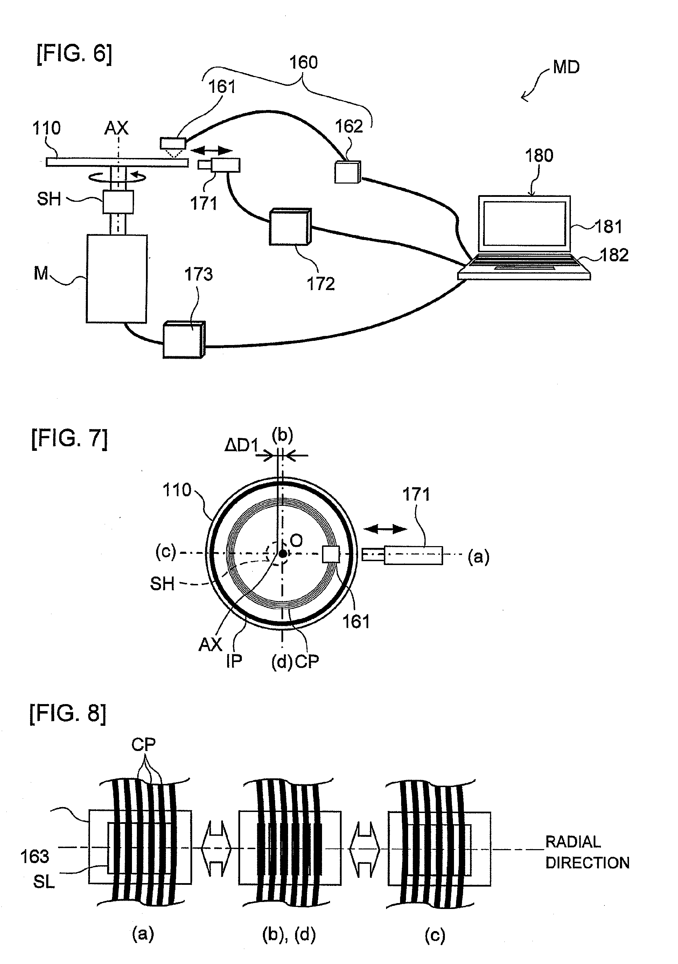

Manufacturing apparatus
Next, the general configuration of the servo motor manufacturing apparatus according to this embodiment will be described with reference to FIG. 6 to FIG. 11. The servo motor manufacturing apparatus MD according to the embodiment adjusts the position of the rotating disk 110 with respect to the shaft SH when the rotating disk 110 is to be fixed to the shaft SH. Further, the servo motor manufacturing apparatus MD adjusts the position of the optical module 120 with respect to the rotating disk 110 when the optical module 120 is fixed opposite the rotating disk 110.

Adjustment of rotating disk position
First, adjustment of the position of the rotating disk 110 with respect to the shaft SH when the rotating disk 110 is to be fixed to the shaft SH will be described with reference to FIG. 6 to FIG. 8. FIG. 6 is an explanatory view for explaining the configuration of the section of the servo motor manufacturing apparatus according to the embodiment that is used when adjusting the position of the rotating disk. FIG. 7 is a top view showing an example when the axis of the shaft and the disk center of the rotating disk are eccentric. FIG. 8 is an explanatory view for explaining the motion of the concentric pattern of the linear encoder when the axis of the shaft and the disk center of the rotating disk are eccentric.

As shown in FIG. 6, the servo motor manufacturing apparatus MD comprises a reflective linear encoder 160, a linear motor 171, and a controller 180. The linear encoder 160 detects a change in the radial direction of the concentric patterns CP of a part of the circumferential region of the rotating disk 110 movably arranged on the shaft SH. The linear motor 171 adjusts the position of the rotating disk 110 so that the axis AX of the shaft SH to which the rotating disk 110 is fixed aligns with the disk center O of the rotating disk 110. The controller 180 controls the linear motor 171 and the motor M based on the output signal of the above-described linear encoder 160.

The linear encoder 160 comprises a linear encoder head 161 and an eccentricity calculating portion 162. The output signal of the linear encoder head 161 is subjected to A/D conversion, for example, followed by multiplication processing, and conversion to a position signal of the rotating disk 110 by the eccentricity calculating portion 162. This position signal is then inputted to the controller 180. The signal output from the controller 180 to the linear motor 171 is converted to a motor drive signal by a motor controller 172. Subsequently, this signal is temporarily converted to an analog signal, further subjected to current amplification by an amplifier (not shown), and inputted to the linear motor 171. As a result, the linear motor 171 drives the unit as instructed by the controller 180. Further, a motor controller 173 rotates the motor M based on an output signal outputted from the controller 180 to the motor M.

Note that the linear motor 171 and the motor controllers 172 and 173 are equivalent to the disk position adjusting means described in the claims. Further, the controller 180 is equivalent to the control means.

The linear encoder head 161 is arranged opposite a part of the circumferential region of the concentric patterns CP of the rotating disk 110. This linear encoder head 161 comprises a light source and light receiving elements (not shown), and a fixed slit 163 (see FIG. 8). As shown in FIG. 8, a plurality of rectangular slits SL is formed in parallel on the fixed slit 163. The plurality of slits SL is arranged between the light source / light receiving elements and the rotating disk 110, along the radial direction of the rotating disk 110. In a case where the axis AX of the shaft SH to which the rotating disk 110 is fixed and the disk center O of the rotating disk 110 are eccentric, the concentric patterns CP change (move) radially at the arranged position of the linear encoder head 161 when the rotating disk 110 is rotated. This makes it possible for the linear encoder 160 to detect eccentricity.

For example, in the example shown in FIG. 7, the axis AX of the shaft SH and the disk center O of the rotating disk 110 are eccentric by an amount equivalent to ΔD1. Here, the rotational positions on the rotating disk 110 where the distance from the axis AX of the shaft SH to the outer periphery of the rotating disk 110 is longest, shortest, and in the middle are (a), (c), and (b) and (d), respectively. The angle between each of these rotational positions (a), (b), (c), and (d) is 90°. In this case, as shown in FIG. 8, when the rotational position of the rotating disk 110 is (a), the concentric patterns CP of the linear encoder head 161 are positioned further on the outer periphery in the radial direction than the slits SL. When the rotational position of the rotating disk 110 is (b) or (d), the concentric patterns CP of the linear encoder head 161 are positioned on the slits SL. When the rotational position of the rotating disk 110 is (c), the concentric patterns CP of the linear encoder head 161 are positioned further on the inner periphery in the radial direction than the slits SL. That is, the concentric patterns CP change (move) radially by an amount equivalent to 2ΔD1 at the arranged position of the linear encoder head 161.

Thus, when the concentric patterns CP formed on the rotating disk 110 are viewed in part in a narrow region in the circumferential direction, any eccentricity that may exist can be observed similar to linear slits when the rotating disk 110 is rotated. Accordingly, in this embodiment, the linear encoder is used as means for detecting eccentricity. That is, the concentric patterns CP are used as a scale of the linear encoder 160 for eccentric adjustment of the rotating disk 110. Note that detecting means other than the linear encoder may be used as long as the means is optical detecting means capable of detecting the radial change in the concentric patterns CP of the rotating disk 110.

According to such a principle as described above, sine wave analog signals of two different phases are produced in accordance with the amount of radial movement of the concentric patterns CP from the linear encoder head 161. The eccentricity calculating portion 162 finds these analog signals in digitized form after the signals have been subjected to a multiplication and digitization process. Then, the eccentricity calculating portion 162 calculates the half value of the difference between the maximum and minimum values of the position signals obtained when the rotating disk 110 is rotated once as the eccentricity, and inputs that value to the controller 180. The controller 180 identifies the angle of the rotating disk 110 where the maximum or minimum value of the position signal is obtained (that is, where eccentricity is maximum) as the maximum eccentricity position. Then, the controller 180 stops the driving power of the motor M at this maximum eccentricity position thus identified to stop the rotation of the rotating disk 110, and activates the linear motor 171 to decrease the eccentricity.

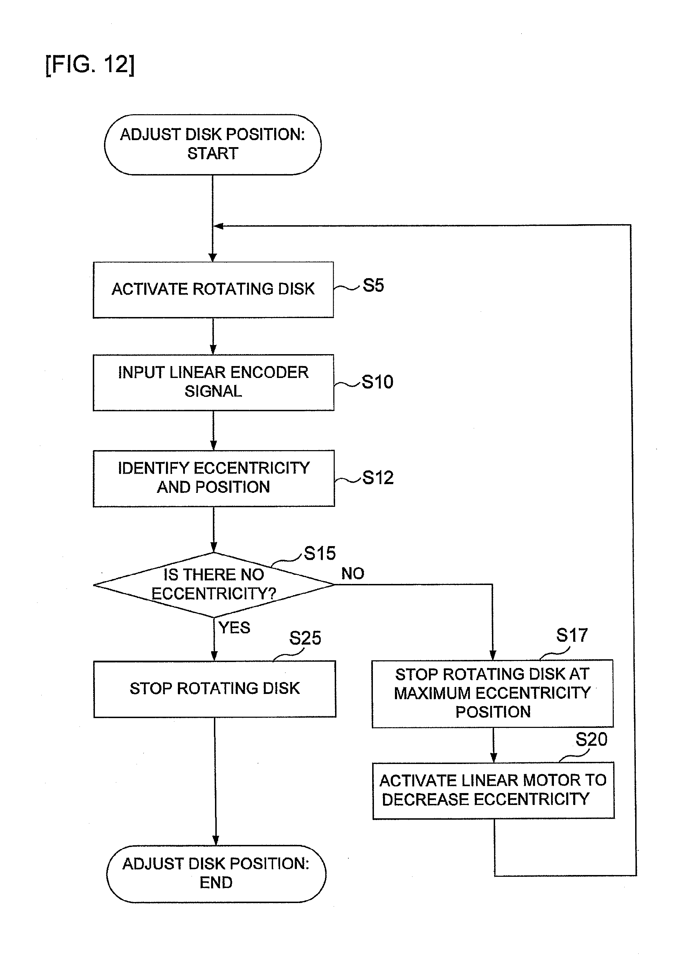

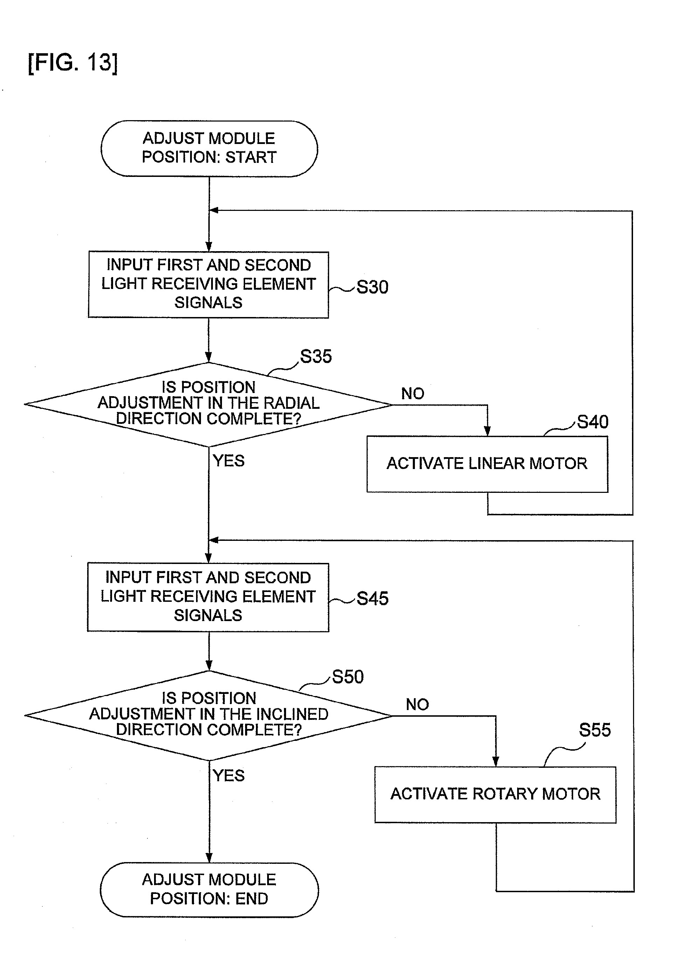

Examples of controllers used as the controller 180 include a general-purpose PC comprising a display portion 181, such as a liquid-crystal display, and an operating portion 182 comprising a mouse and keyboard, etc. This controller 180, though not shown, has a built-in CPU as the central processing unit, ROM, RAM, etc. The CPU performs signal processing in accordance with programs (including a program for executing the manufacturing method procedure of the servo motor shown in FIG. 12 and FIG. 13 described later) that use the temporary memory function of RAM and are stored in advance on ROM.

When the rotating disk 110 is arranged on the shaft SH, the controller 180, with the above configuration, adjusts the position so that the axis AX of the shaft SH aligns with the disk center O of the rotating disk 110. To achieve this, the controller 180 controls the drive of the linear motor 171 and the motor M based on the output signal of the linear encoder 160. Specifically, the controller 180 determines whether or not the concentric patterns CP change in the radial direction based on the output signal of the linear encoder 160 while driving the motor M and rotating the rotating disk 110. When a change is detected, the controller 180 stops the motor M at the maximum eccentricity position. As a result, as shown in FIG. 7, the linear motor 171 positioned in the same circumferential position with respect to the linear encoder 160 and rotating disk 110 provides drive in such a manner that decreases the eccentricity, moving the rotating disk 110 radially. Subsequently, the controller 180 once again drives the motor M and detects if the concentric patterns CP change radially based on the output signal of the linear encoder 160. If there is no change, the controller 180 regards the axis AX of the shaft SH to be aligned with the disk center O of the rotating disk 110, and ends position adjustment. On the other hand, if there is change, the controller 180 regards eccentricity to still exist, and repeats the same procedure as described above.

Note that the amount of drive provided by the linear motor 171 during the above-described adjustment may be determined according to the amount of shift in the concentric patterns CP detected by the linear encoder 160, or may be an amount determined in a fixed manner in advance. In this case, the linear motor 171 may intermittently provide drive over a plurality of times while viewing the output signal of the linear encoder 160 to adjust the position. Further, while the controller 180 stops the rotation of the rotating disk 110 prior to position adjustment by the linear motor 171 in the above, the controller 180 may activate the linear motor 171 to execute position adjustment while rotating the rotating disk 110. Further, while the liner motor is used as the disk position adjusting means in this embodiment, any other actuator may be used as long as the actuator is capable of moving the rotating disk 110 in extremely small amounts.

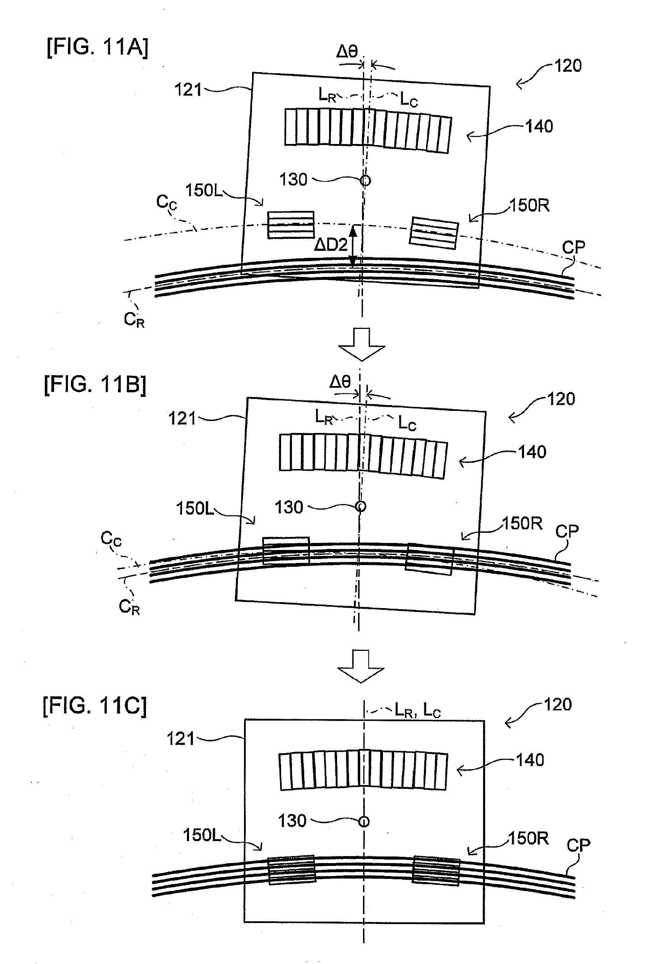

Adjustment of the optical module position
Next, position adjustment of the optical module 120 with respect to the rotating disk 110 when the optical module 120 is fixed across from the rotating disk 110 will be described with reference to FIG. 9 to FIG. 11. FIG. 9 is an explanatory view for explaining the configuration of the section of the servo motor manufacturing apparatus according to the embodiment that is used when adjusting the position of the optical module. FIG. 10 is a top view illustrating an example of the layout of the linear encoder for adjusting the module position. FIG. 11 is an explanatory view for explaining an example of the module position adjustment operation.

As shown in FIG. 9 and FIG. 10, the servo motor manufacturing apparatus MD comprises a linear motor 174, a rotary motor 175, and the above-described controller 180. The linear motor 174 adjusts the position of the optical module 120 comprising the light receiving element groups 150L and 150R for position adjustment, in the radial direction (indicated by arrow r) with respect to the rotating disk 110. The rotary motor 175 adjusts the inclined position (indicated by arrow θ) of the optical module 120 with respect to a radial line L_{R} that extends radially from the disk center O of the rotating disk 110. The controller 180 controls the linear motor 174 based on a change in amplitude of the output signal of the light receiving element groups 150L and 150R for position adjustment. Further, the controller 180 controls the rotary motor 175 based on a difference in phase of the output signal of each of the light receiving element groups 150L and 150R for position adjustment.

Note that the above linear motor 174, the rotary motor 175, and the linear motor 174 and the rotary motor 175 are equivalent to the first module position adjusting means, the second module position adjusting means, and the module position adjusting means described in the claims.

Each of the output signals of the light receiving element groups 150L and 150R for adjusting the position of the optical module 120 is inputted to a module position assessment portion 176. The module position assessment portion 176 detects a change in amplitude and assesses whether or not the optical module 120 is positioned in the correct position based on these output signals. When the module position assessment portion 176 assesses that the position is not correct, the controller 180 activates the linear motor 174 and the rotary motor 175 via motor controllers 177 and 178 to move a printed-wiring board 190 in the radial and inclined directions. As a result of the movement of the printed-wiring board 190, the optical module 120 is adjusted in position. The optical module 120 is provided to the printed-wiring board 190, This printed-wiring board 190 is provided in a freely moving manner in the above-described radial and inclined directions while kept at a predetermined distance from the rotating disk 110. Note that, according to this embodiment, the position of the optical module 120 is adjusted by moving the printed-wiring board 190 onto which the optical module 120 is mounted. Nevertheless, the optical module 120 may be directly moved by the linear motor 174 and the rotary motor 175.

As shown in FIG. 10, the circumferential position of the linear motor 174 with respect to the rotating disk 110 is the same as the circumferential position of the optical module 120 with respect to the rotating disk 110. With this arrangement, the linear encoder 174 can adjust the position of the optical module 120 in the radial direction with respect to the rotating disk 110 by moving the printed-wiring board 190. Further, the position of the axis of the rotary motor 175 (not shown in FIG. 10) substantially aligns with the central position of the optical module 120. With this arrangement, the rotary motor 175 can adjust the position of the optical module 120 in the inclined direction with respect to the rotating disk 110 by rotating the printed-wiring board 190.

Note that the arranged positions and quantities of the linear motor 174 and the rotary motor 175 are not limited to the above, allowing suitable changes.

The controller 180 controls the drive of the linear motor 174 and the rotary motor 175 based on the output signal of the light receiving element groups 150L and 150R for position adjustment when the optical module 120 is fixed across from the rotating disk 110. With this arrangement, the controller 180 adjusts the position of the optical module 120 with respect to the rotating disk 110 in the radial and inclined directions. That is, a change in position of the optical module 120 with respect to the rotating disk 110 in the radial direction materializes as a change in amplitude of the output signal of the light receiving element groups 150L and 150R for position adjustment. With this arrangement, the controller 180 controls the drive of the linear motor 174 based on the amplitude change, thereby achieving adjustment of the radial position of the optical module 120 to the desired position. That is, a change in position of the optical module 120 with respect to the rotating disk 110 in the inclined direction materializes as a difference in phase of each output signal of the light receiving element groups 150L and 150R for position adjustment. With this arrangement, the controller 180 controls the drive of the linear motor 175 based on the phase difference, thereby achieving adjustment of the inclined position of the optical module 120 to the desired position.

Note that the amount of drive of the linear motor 174 and the rotary motor 175 during the above adjustments may be determined according to the output signal of the light receiving element groups 150 L and 150R for position adjustment, or may be an amount predetermined in advance in a fixed manner. In this case, the linear motor 174 and the rotary motor 175 may intermittently provide drive over a plurality of times while viewing the output signal of the light receiving element groups 150L and 150R for position adjustment to adjust the position. Further, while the linear motor and rotary motor are used as the module position adjusting means in this embodiment, any other actuator may be used as long as the actuator is capable of moving the printed-wiring board 190 in extremely small amounts.

An example of the position adjustment operation of the optical module 120 will now be described with reference to FIG. 11. As shown in FIG. 11A, the optical module 120 is shifted in position in both the radial and inclined directions with respect to the rotating disk 110. In this example, the radial distance between the center line C_{C} (same as the C_{C} shown in FIG. 4 previously described) of the light receiving element groups 150L and 150R for position adjustment, and the center line C_{R} of the concentric patterns CP is ΔD2, and the radial shift is ΔD2. Further, the angle between the radial line L_{R} of the rotating disk 110 and the center line L_{C} of the optical module 120 (substrate 121) is Δθ, and the amount of shift in the inclined direction is Δθ.

From the state shown in FIG. 11A, the controller 180 drives the linear motor 174 to move the printed-wiring board 190 along the radial direction With this, based on a certain timing, the concentric patterns CP of the rotating disk 110 appear opposite both the light receiving element groups 150L and 150R for position adjustment. At this time, since the concentric patterns CP are formed by a method such as deposition of a highly reflective material, the amplitude of each of the output signals of the light receiving element groups 150L and 150R for position adjustment increases to the maximum value (or to or above a predetermined threshold value). In this state, the controller 180 stops the movement of the printed-wiring board 190. With this arrangement, as shown in FIG. 11B, the optical module 120 moves in the radial direction by an amount equivalent to ΔD2, completing adjustment of the radial position.

Next, from the state shown in FIG. 11B, the controller 180 drives the rotary motor 175 to move the printed-wiring board 190 along the inclined direction. With this, based on a certain timing, the concentric patterns CP of the rotating disk 110 appear opposite both the light receiving element groups 150L and 150R for position adjustment, with the opposing states being substantially the same. At this time, the difference in phase of each output signal of the light receiving element groups 150L and 150R for position adjustment changes to 0 (or to or below a predetermined threshold value). In this state, the controller 180 stops the movement of the printed-wiring board 190. With this arrangement, as shown in FIG. 11C, the optical module 120 moves in the inclined direction by an amount equivalent to Δθ, completing adjustment of the inclined position.

Adjustment of the radial position and inclined position of the optical module 120 with respect to the rotating disk 110 is thus completed. Note that, while the above describes an illustrative scenario in which the radial position and the inclined position are each adjusted once, the adjustments may be repeated to increase position adjustment accuracy.

Operation of manufacturing apparatus (manufacturing method)
Next, details of the control operation executed by the CPU of the controller 180 when the position of the rotating disk 110 and the position of the optical module 120 are adjusted as described above by the servo motor manufacturing apparatus MD will be described with reference to FIG. 12 and FIG. 13. FIG. 12 is a flowchart showing the control details during disk position adjustment, which is executed by the CPU of the controller. FIG. 13 is a flowchart showing the control details during module position adjustment, which is executed by the CPU of the controller. This description uses as an example a case where the module position is adjusted as shown in FIG. 13 after the disk position is adjusted as shown in FIG. 12.

Disk position adjustment
In FIG. 12, first the rotating disk 110 is temporarily installed to the shaft SH prior to step S5. This temporary installation is performed by an operator by temporarily screwing the parts or by fixing the parts using the viscosity of an adhesive before the adhesive cures, for example. Note that any other method is also acceptable as long as the method enables in-plane movement by the linear motor 171 and rotation with the shaft SH (or as long as the method can be relaxed at the time of movement to enable movement).

In step S5, the controller 180 outputs a drive signal to the motor M to drive the motor M and rotate the rotating disk 110.

Next, in step S10, the controller 180 inputs a signal to be outputted from the linear encoder 160.

Next, in step S12, the controller 180 identifies the amount of eccentricity based on the half value of the difference between the maximum and minimum values of the position signal obtained when the rotating disk 110 is rotated once, which is inputted from the eccentricity calculating portion 162. Further, the controller 180 identifies the angle of the rotating disk 110 where the maximum or minimum value of the position signal is obtained (that is, where eccentricity is maximum) as the maximum eccentricity position.

Next, in step S15, the controller 180 identifies any eccentricity between the axis AX of the shaft SH and the disk center O of the rotating disk 110. Specifically, the controller 180 assesses that there is no eccentricity when the half value inputted from the eccentricity calculating portion 162 in the above step S12 is 0 (or less than or equal to a predetermined threshold value). When the half value is not 0 (or greater than or equal to a predetermined threshold value), the controller 180 assesses that there is eccentricity. When the controller 180 assesses that there is eccentricity (NO in step S15), the flow proceeds to step S17.

In step S17, the controller 180 stops the motor M at the maximum eccentricity position identified in the above-described step S12, stopping the rotation of the rotating disk 110. Note that, for position control at this time, the controller 180 outputs a command to the motor controller 173 to achieve the maximum eccentricity position identified in the above-described step S12. Or, the controller 180 may achieve control by measuring the eccentricity and stopping rotation at the maximum position (in this case, identification of the maximum eccentricity position in the above-described step S12 is not required).

In step S20, the controller 180 outputs a drive signal to the motor controller 172 and drives the linear motor 171 by a predetermined amount based on the eccentricity identified in the above-described step S12, moving the rotating disk 110 so that the eccentricity decreases. Subsequently, the flow returns to step S5 where the controller 180 once again drives the motor M to rotate the rotating disk 110, and assesses any eccentricity based on the output signal of the linear encoder 160.

The controller 180 adjusts the position of the rotating disk 110 by thus repeating the procedures of the above-described steps S5 to S20.

On the other hand, in a case where the controller 180 assesses in the above-described step S15 that there is no eccentricity (YES in step S15), the flow proceeds to step S25.

In step S25, the controller 180 stops the motor M, stopping the rotation of the rotating disk 110.

The rotating disk 110 is then fixed to the shaft SH by the operator. The fixation process is achieved fully securing the rotating disk 110 using a fixing member such as a screw, or by curing an adhesive, for example. With this, the flow ends.

Module position adjustment
As shown in FIG. 13, first, in step S30, the controller 180 inputs a signal to be outputted from the light receiving element groups 150L and 150R for adjusting the position of the optical module 120.

Next, in step S35, the controller 180 assesses whether or not position adjustment of the optical module 120 in the radial direction has been completed based on the change in amplitude of the output signal of the light receiving element groups 150L and 150R for position adjustment inputted in the above-described step S30. Specifically, the controller 180 assesses whether or not the amplitude of the output signal is the maximum value (or greater than or equal to a predetermined threshold value), for example. When the amplitude of the output signal is not the maximum value (or greater than or equal to the predetermined threshold value; NO in step S35), the controller 180 assesses that radial position adjustment of the optical module 120 is not complete, and the flow proceeds to step S40.

In step S40, the controller 180 outputs a drive signal to the motor controller 177 and drives the linear motor 174 by a predetermined amount. With this arrangement, the printed-wiring board 190 is moved by a predetermined amount, thereby decreasing the amount of radial eccentricity of the optical module 120. Subsequently, the flow returns to step S30 where the controller 180 once again inputs a signal to be outputted from the light receiving element groups 150L and 150R for position adjustment and, in the next step S35, assesses whether or not the adjustment of the position of the optical module 120 in the radial direction has been completed.

The controller 180 adjusts the radial position of the optical module 120 by thus repeating the procedures of the above-described steps S30 to S40.

In the above-described step S35, when the amplitude of the output signal is the maximum value (or greater than or equal to the predetermined threshold value; YES in step S35), the controller 180 assesses that radial position adjustment of the optical module 120 is complete, and the flow proceeds to step S45.

In step S45, the controller 180 inputs a signal to be outputted from the light receiving element groups 150L and 150R for position adjustment of the optical module 120, in the same manner as in the above-described step S30.

Next, in step S50, the controller 180 assesses whether or not position adjustment of the optical module 120 in the inclined direction has been completed based on the difference in phase of each output signal of the light receiving element groups 150L and 150R for position adjustment inputted in the above-described step S45. Specifically, the controller 180 assesses whether or not the phase difference of the output signal is 0 (or less than or equal to a predetermined threshold value), for example. When the phase difference of the output signal is not 0 (or less than or equal to the predetermined threshold value; NO in step S50), the controller 180 assesses that inclined position adjustment of the optical module 120 is not complete, and the flow proceeds to step S55.

In step S55, the controller 180 outputs a drive signal to the motor controller 178 and drives the rotary motor 175 by a predetermined amount. With this arrangement, the printed-wiring board 190 is moved by a predetermined amount in the inclined direction, thereby decreasing the amount of inclined eccentricity of the optical module 120, Subsequently, the flow returns to step S45 where the controller 180 once again inputs a signal to be outputted from the light receiving element groups 150L and 150R for position adjustment and, in the next step S50, assesses whether or not the adjustment of the position of the optical module 120 in the inclined direction has been completed.

The controller 180 adjusts the inclined position of the optical module 120 by thus repeating the procedures of the above-described steps S45 to S55.

In the above-described step S50, when the phase difference of the output signal is 0 (or less than or equal to a predetermined threshold value; YES in step S50), the controller 180 assesses that inclined position adjustment of the optical module 120 is complete, and the flow ends.

In the above, the steps S5, S10, S12, S15, S17, S20, and S25 are equivalent to the disk position adjustment step described in the claims, and the steps S30, S35, S40, S45, S50, and S55 are equivalent to the module position adjustment step in the claims. Further, the overall disk position adjustment and module position adjustment process described above, which includes the procedures of these steps S5 to S25 and S30 to S55, is equivalent to the servo motor manufacturing method described in the claims.

Examples of advantages
In the reflective encoder 100 according to the embodiment described above, the concentric patterns CP of a concentric shape are formed around the periphery of the disk center O of the rotating disk 110. Further, as described above, the linear encoder 160 that is capable of detecting a change in the radial direction of the concentric patterns CP is arranged opposite a part of the circumferential region of the section in which the concentric patterns CP of the rotating disk 110 are formed. With this arrangement, in a case where the axis AX of the shaft SH to which the rotating disk 110 is to be fixed and the disk center O of the rotating disk 110 are eccentric, the concentric patterns CP change radially at the arranged position of the linear encoder 160 when the rotating disk 110 is rotated. This makes it possible for the linear encoder 160 to detect any existing eccentricity. Accordingly, when the rotating disk 110 is arranged on the shaft SH, it is possible to adjust the position of the rotating disk 110 so that the axis AX of the shaft SH and the disk center O of the rotating disk 110 align, based on the output signal of the linear encoder 160.

Further, in the reflective encoder 100 according to the embodiment, the optical module 120 comprises the light receiving element groups 150L and 150R for position adjustment, which receive the light reflected from the concentric patterns CP of the rotating disk 110. These light receiving element groups 150L and 150R for position adjustment are arranged at predetermined positions on the substrate, making it possible to adjust the position of the optical module 120 with respect to the rotating disk 110. That is, a change in position of the optical module 120 in the radial direction with respect to the rotating disk 110 materializes as a change in amplitude of the output signal of the light receiving element groups 150L and 150R for position adjustment. Accordingly, the radial position of the optical module 120 can be adjusted to a desired position based on the amplitude change. That is, a change in position of the optical module 120 with respect to the rotating disk 110 in the inclined direction materializes as a difference in phase of each output signal of the light receiving element groups 150L and 150R for position adjustment. Accordingly, the inclined position of the optical module 120 can be adjusted to a desired position based on the phase difference. Automatic adjustment of the radial and inclined positions of the optical module 120 with respect to the rotating disk 110 can thus be achieved.

As described above, according to this embodiment, use of a microscope is not required for adjusting the positions of the rotating disk 110 and the optical module 120. Accordingly, even if the optical module 120 comprising the light receiving element groups 150L and 150R for position adjustment, and the rotating disk 110 are placed relatively far apart, it is possible to easily manufacturing the servo motor SM while adjusting the positions of the rotating disk 110 and optical module 120 with high accuracy. Further, because position adjustments can be achieved automatically, cycle time can be reduced.

Further, in particular, according to the embodiment, the light receiving element groups 150L and 150R for position adjustment are arranged axisymmetrically with respect to the center line L_{C} of the substrate 121 of the optical module 120. With this arrangement, the line connecting the light receiving element groups 150L and 150R for position adjustment is orthogonal to the center line L_{C} of the substrate 121. This makes it possible to align the center line L_{C} of the substrate 121 and the radial line L_{R} of the rotating disk 110 by making adjustments that change the phase difference of each output signal of the light receiving element groups 150L and 150R for position adjustment to 0 (or less than or equal to a predetermined threshold value). As a result, reliably adjustment of the inclined position of the substrate 121 is possible.

Further, in particular, according to the embodiment, the incremental pattern IP is formed along the circumferential direction along with the concentric patterns CP on the rotating disk 110. The substrate 121 comprises the light receiving element group 140 for position detection, which receives the reflected light emitted from the light source 130 and subjected to the action of the incremental pattern IP. With this arrangement, it is possible to detect the relative position (relative angle from the reference angle) of the shaft SH to which the rotating disk 110 is fixed.

Further, in particular, in the embodiment, a reflective encoder is used as the encoder. The reflective encoder, compared to the transmissive encoder, places the rotating disk 110 and the substrate 181 and the substrate 121 comprising the light receiving groups 150L and 150R for position adjustment relatively far away from each other. Accordingly, the embodiment has the remarkable effect of not requiring use of a microscope for adjusting the positions of the rotating disk 110 and the substrate 121. As a result, the manufacturing method of the servo motor indicated in FIG. 12 and FIG. 13 is, in particular, a preferred manufacturing method for a servo motor comprising a reflective encoder.

Alternative embodiments, etc.
Note that the present invention is not limited to the above-described disclosed embodiment, and various modifications may be made without deviating from the spirit and scope of the invention.

For example, while the above describes an illustrative scenario in which the encoder used is a reflective encoder in which the light source 130 and the light receiving element groups 150L and 150R for position adjustment are positioned on the substrate 121 of the optical module 120, the present invention is not limited thereto. That is, the encoder used may be a so-called transmissive encoder in which the light source is placed opposite the substrate 121 comprising the light receiving element groups 150L and 150R for position adjustment, with the rotating disk 110 therebetween. In such a case, the concentric patterns CP are best formed as slits serving as pores on the rotating disk 110, with the linear encoder 160 serving as a transmissive linear encoder. With this arrangement, it is possible to adjust the position of the rotating disk 110 with respect to the shaft SH in the same manner as the above-described embodiment. Further, by having the light receiving element groups 150L and 150R for position adjustment receive the light emitted from the light source and transmitted through the concentric slits formed on the rotating disk 110, it is possible to adjust the position of the substrate 121 with respect to the rotating disk 110. Such a case of transmissive encoder use thus also results in the same advantages as the above-described embodiment.

Further, while only the incremental pattern IP is formed as a pattern for position detection on the rotating disk 110 in the above, a serial absolute pattern may be formed. In such a case, an absolute light receiving element group which receives the light reflected from the serial absolute pattern is provided to the substrate 121, making it possible to detect the absolute position (absolute angle) of the shaft SH.

Further, while the above described an illustrative scenario in which the position of the optical module 120 is adjusted after position adjustment of the rotating disk 110, the positions do not necessarily need to be adjusted in that order. The position of the rotating disk 110 may be adjusted after the position adjustment of the optical module 120. For example, the rotating disk 110 may be roughly positioned and temporarily fixed to the shaft SH, and position adjustment of the optical module 120 with respect to the rotating disk 110 may be performed. Then, subsequently, the position of the rotating disk 110 may be fine-tuned.

Further, while the above described an illustrative scenario in which a plurality of concentric patterns CP is formed on the rotating disk 110, the present invention is not limited thereto. That is, the concentric pattern CP does not necessarily need to be provided in plurality, but may be formed as a single pattern. In such a case, the configuration which includes the light receiving element groups 150L and 150R for position adjustment, which receive the light reflected from the concentric patterns CP, may be changed to one that includes only the single light receiving element 151 for position adjustment. Note that, in a case where a plurality of concentric patterns CP is provided, it is possible to improve the detection resolution of the linear encoder used by the servo motor manufacturing apparatus when adjusting the position of the disk, for example. This makes it possible to execute position adjustment with higher accuracy.

Further, while the eccentricity calculating portion 162 and the module position assessment portion 176 are provided separately from the controller 180 in the above-described embodiment, these functions may be realized within the controller 180. In such a case, the output signal from the optical module 120 or the linear encoder head 161 is preferably sent to the controller 180 upon D/A conversion. Further, the motor controller 172 arranged within the servo motor manufacturing apparatus MD may be established as an encoder separate from the encoder 100 of the servo motor SM to be manufactured in order to identify the extent to which the target to be moved (the rotating disk 110 or the optical module 120) is to be moved. Further, the control function of the motor controller 172, etc., may be achieved within the controller 180. Note, however, that in such a case, the signal for controlling the motor that is outputted from the controller 180 is preferably supplied to each motor after A/D conversion and amplification.

Further, in addition to the examples described above, the techniques of the above-described embodiment and exemplary modifications may also be suitably combined.

Although other examples are not individually described herein, various changes and modifications can be made without departing from the spirit and scope of the present invention.

## Claims

1. A servo motor manufacturing method, comprising:
a disk position adjustment step (S5, S10, S12, S15, S17, S20, S25) for adjusting a position of a rotating disk (110) with respect to a shaft (SH), in a case where said rotating disk (110) to which at least one concentric pattern (CP) is formed around a disk center (O) is to be fixed to said shaft (SH) of a motor (M), wherein:
in said disk position adjustment step (S5, S10, S12, S15, S17, S20, S25), said concentric pattern (CP) is used as a scale of a linear encoder (160) to adjust an eccentricity of said rotating disk (110).

2. The servo motor manufacturing method according to claim 1, wherein:
in said disk position adjustment step (S5, S10, S12, S15, S17, S20, S25), a position of said rotating disk (110) is adjusted so that the axis (AX) of said shaft (SH) aligns with a disk center (O) of said rotating disk (110), based on an output signal of said linear encoder (160) capable of detecting a change in a radial direction of said concentric pattern (CP) of a partial circumferential region of said rotating disk (110).

3. The servo motor manufacturing method according to claim 2, wherein:
in said disk position adjustment step (S5, S10, S12, S15, S17, S20, S25), an amount of eccentricity and a direction of eccentricity of said disk center (O) with respect to said axis (AX-) are identified by means of a change in the radial direction of said concentric pattern (CP) when said rotating disk (110) is rotated; and
disk position adjusting means (171,172,173) moves said rotating disk (110) in the radial direction based on a direction and an amount that result in elimination of said amount of eccentricity.

4. The servo motor manufacturing method according to any one of claims 1 to 3, further comprising:
a module position adjustment step (S30, S35, S40, S45, S50, S55) for adjusting a position of a optical module (120) with respect to said rotating disk (110) in a case where said optical module (120) comprising on a substrate (121) a first light receiving element (150L) and a second light receiving element (150R) that receive light that is emitted from a light source (130) and subjected to an action of said concentric pattern (CP) is fixed facing said rotating disk (110) installed to said shaft (SH); wherein
in said module position adjustment step (S30, S3S, S40, S45, S50, S55), a radial position of said optical module (120) is adjusted with respect to said rotating disk (110) based on a change in amplitude of output signals of said first light receiving element (150L) and said second light receiving element (150R), and an inclined position of said optical module (120) is adjusted with respect to radial lines that extend in a radial shape from said disk center (O) in said rotating disk (110) based on a difference in phase between the output signal of said first light receiving element (150L) and the output signal of said second light receiving element (150R).

5. A servo motor manufacturing apparatus (MD), comprising:
a linear encoder (160) configured to use a concentric pattern (CP) formed around a disk center (O) of a rotating disk (110) as a scale;
disk position adjusting means (171, 172, 173) configured to adjust a position of said rotating disk (110) so that the axis (AX) of a shaft (SH) of a motor (M) to which said rotating disk (110) is fixed aligns with the disk center (O) of said rotating disk (110); and
control means (180) configure to control said disk position adjusting means (171, 172, 173) based on an output signal of said linear encoder (160).

6. The servo motor manufacturing apparatus (MD) according to claim 5, further comprising:
module position adjusting means (174, 175) having first module position adjusting means (174) configured to adjust a radial position of an optical module (120) comprising on a substrate (121) a first light receiving element (150L) and a second light receiving element (150R) that receive light that is emitted from a light source (130) and subjected to an action of said concentric pattern (CP) with respect to said rotating disk (110), and second module position adjusting means (175) configured to adjust an inclined position of said optical module (120) with respect to radial lines that extend in a radial shape from said disk center (O) in said rotating disk (110), wherein
said control means (180) control said first module position adjusting means (174) based on a change in amplitude of output signals of said first light receiving element (150L) and said second light receiving element (150R), and control said second module position adjusting means (175) based on a difference in phase between the output signal of said first light receiving element (150L) and the output signal of said second light receiving element (150R).

7. A servo motor (SM), comprising:
as an encoder (100), a rotating disk (110) having at least one concentric pattern (CP) formed around a disk center (O) said concentric pattern (CP) used to adjust an amount of eccentricity of said disk center (O) and the axis (AX) of a shaft (SH) of a motor.

8. The servo motor (SM) according to claim 7, wherein:
said encoder (100) comprises on a substrate (121) an optical module (120) having a first light receiving element (150L) and a second light receiving element (150R) that receive light that is emitted from a light source (130) and subjected to an action of said concentric pattern (CP);
said optical module (120) is disposed on a position adjusted with respect to said rotating disk (110) based on optical signals received by said first light receiving element (150L) and said second light receiving element (150R).

9. The servo motor (SM) according to claim 8, wherein:
said first light receiving element (150L) and said second light receiving element (150R) are arranged axisymmetrically with respect to a center line of said substrate (121).

10. The server motor (SM) according to claim 8 or 9, wherein:
said rotating disk (110) has a pattern (IP) for position detection established with said concentric pattern (CP) along a circumferential direction; and
said optical module (120) has on said substrate (121) a light receiving element (140) for position detection, which receives light that is emitted from said light source (130) and subjected to an action of said pattern (IP) for position detection.

11. The servo motor (SM) according to any one of claims 8 to 10, wherein:
said light source (130) is provided to said substrate (121); and
said first light receiving element (150L) and said second light receiving element (150R) receive light that is reflected from said concentric pattern (CP).

12. An encoder (100), comprising:
a rotating disk having at least one concentric pattern (CP) formed around a disk center (O), said concentric pattern (CP) used to adjust an amount of eccentricity of said disk center (O) and the axis (AX) of a shaft (SH) of a motor.
